# EUROPEAN PATENT SPECIFICATION

(11) **EP 4 636 386 B1**
(45) Date of publication and mention of the grant of the patent: **09.12.2026**
(21) Application number: 24382424.0
(22) Date of filing: 19.04.2024
(51) Int. Cl.: G01N 15/08, G01N 9/10

(54) **DEVICE AND METHOD FOR MEASURING THE CAPACITY OF DIAMAGNETIC POROUS MATERIALS TO CAPTURE SUBSTANCES DISSOLVED IN A LIQUID MEDIUM**
VORRICHTUNG UND VERFAHREN ZUR MESSUNG DER KAPAZITÄT DIAMAGNETISCHER PORÖSER MATERIALIEN ZUR ERFASSUNG VON IN EINEM FLÜSSIGEN MEDIUM GELÖSTEN SUBSTANZEN
DISPOSITIF ET PROCÉDÉ DE MESURE DE LA CAPACITÉ DE MATÉRIAUX POREUX DIAMAGNÉTIQUES À CAPTURER DES SUBSTANCES DISSOUTES DANS UN MILIEU LIQUIDE

(43) Date of publication of application: 22.10.2025
(73) Proprietor: Universidad del País Vasco/Euskal Herriko Unibertsitatea, 48940 Leioa, Vizcaya (ES)
(72) Inventor: PÉREZ AGUIRRE, Rubén, 48940 BIZKAIA (ES); CASTILLO GARCÍA, Oscar, 48940 BIZKAIA (ES); BEOBIDE PACHECO, Garikoitz, 48940 BIZKAIA (ES)
(74) Representative: Balder IP Law, S.L.

(56) References cited:
- US-A1- 2013 314 080
- BARROSO NAGORE ET AL: "Magnetic sustentation as an adsorption characterization technique for paramagnetic metal-organic frameworks", vol. 6, no. 1, 5 January 2023 (2023-01-05), XP093100585, Retrieved from the Internet <URL:https://www.nature.com/articles/s42004-022-00799-w> DOI: 10.1038/s42004-022-00799-w
- KATHERINE A. MIRICA ET AL: "Measuring Densities of Solids and Liquids Using Magnetic Levitation: Fundamentals", JOURNAL OF THE AMERICAN CHEMICAL SOCIETY, vol. 131, no. 29, 29 July 2009 (2009-07-29), pages 10049 - 10058, XP055043340, ISSN: 0002-7863, DOI: 10.1021/ja900920s
- WEIRELD DE G ET AL: "AUTOMATED DETERMINATION OF HIGH-TEMPERATURE AND HIGH-PRESSURE GAS ADSORPTION ISOTHERMS USING A MAGNETIC SUSPENSION BALANCE", MEASUREMENT SCIENCE AND TECHNOLOGY, IOP, BRISTOL, GB, vol. 10, no. 2, 1 February 1999 (1999-02-01), pages 117 - 126, XP000893428, ISSN: 0957-0233, DOI: 10.1088/0957-0233/10/2/010

## Description

### OBJECT OF THE INVENTION

The invention relates to a scientific instrumentation device that allows determining the absorption in diamagnetic adsorbent materials of chemical substances dissolved in a liquid medium, and that can fall within the area of chemistry and in the sector of activity dedicated to the development of scientific instrumentation.

### STATE OF THE ART

Adsorption techniques are widely used in the determination of porous materials, since they make it possible to get an idea of the capacity of these materials to capture different analytes of interest. Although multiple devices, many of them commercial, exist in the area of determining the adsorptive capacities of porous materials in the gas phase, the fact is that the only way to determine their capacities in liquid media is through indirect methods, in other words, by previously measuring what is in the aliquot where the adsorbent is added and, after extracting the adsorbent, measuring again what remained uncaptured. This method has significant disadvantages in the current field because it depends on the analyte of interest being completely soluble in the liquid medium, since otherwise the measurement would not be representative, and it depends on having adequate analytical techniques for its quantification that are specific for each analyte.

Furthermore, current characterisation techniques are not capable of directly determining the adsorption in a liquid medium of a dissolved adsorbate trapped inside a solid adsorbent material, so it is determined indirectly by the difference between the amount of analyte present in the initial and final solution. For this purpose, different conventional analytical techniques are usually employed, such as ultraviolet-visible spectroscopy (UV-Vis), nuclear magnetic resonance (NMR), elemental analysis techniques or chromatographic techniques, among others. Each of these characterisation techniques is not applicable to any analyte since they require a specific property on the part of the analyte. In addition, multiple techniques require specific optimisation for each analyte (dissolved adsorbate) prior to the measurement. Therefore, many laboratories find it necessary to have various measurement techniques and equipment to cover the variability of adsorbates with which they work.

European patent application no. 23382643.7 describes a method for the direct determination of the adsorption in a liquid medium of adsorbates on paramagnetic adsorbents. However, the majority of adsorbent materials, and especially those of greater technological and industrial interest, are diamagnetic in nature (zeolites, clays, resins, porous silica, active carbon, etc.), so their study cannot be addressed with the technique described in the aforementioned European patent application.

### DESCRIPTION OF THE INVENTION

The invention provides a device that allows quantifying the adsorption of substances of interest in diamagnetic (non-paramagnetic) porous materials in solution, which is based on the repulsion between two vertically oriented magnetic fields with opposite poles.

The scientific instrumentation device of the invention allows the determination of the amount adsorbed in solution by an adsorbent or porous materials. The device consists of a configuration of magnets that allows a sample holder equipped with a magnet to remain suspended in a confined liquid medium that avoids any change on the relative orientation of its pole with respect to the opposite pole of an external magnet. One of the magnets supports the sample-holder submerged within the liquid through the repulsion force established with an external magnet with opposite pole orientation. The measurement of the distance between the sample holder and the external magnet will change depending on the mass present in the sample holder. Therefore, as the adsorbent increases its mass with the capture of the analytes a change on this distance will appear that correlates with the captured mass percentage.

In a preferred embodiment, one of these magnetic fields is generated with a permanent magnet incorporated in a sample holder in such a way that the orientation of its poles is fixed. This sample holder contains the adsorbent and it is submerged in a container containing the liquid in which the measurement is going to be performed. The shape and dimensions of the container must allow the vertical displacement of the holder without friction but, at the same time, must keep the antiparallel colinear arrangement of the poles of the sample holder and external magnets.

The required external magnetic field can be generated by a permanent magnet or by an electromagnet centred on the vertical of the previous sample holder magnet. The distance between the sample holder and the external magnet providing a constant magnetic field is measured by an actuator that must allow an even, smooth movement and a precision, ideally, of at least a hundredth of a millimetre.

Another configuration may be one where the magnetic field generated by the electromagnet is modified until a fixed distance is achieved. In this configuration, the amount of mass adsorbed will not depend on distance but on the value of the magnetic field generated by the electromagnet. The greater adsorbed mass percentage by the adsorbent, the higher the magnetic field required to achieve this fixed distance.

More specifically, one aspect of the invention relates to a device for measuring the capacity of diamagnetic porous materials to capture substances dissolved in a liquid medium. The device comprises: a sample holder, where the diamagnetic porous material to be measured is going to be placed, and a permanent magnet attached to the lower base of the sample holder.

The device further comprises: a receptacle inside which the sample holder with the permanent magnet attached are housed within a liquid, and such that the container is confined in a vertical position with the permanent magnet supporting the weight of the sample holder and its contents, and an external permanent magnet or an electromagnet arranged below the sample holder permanent magnet and vertically aligned with it. The poles of the magnets must be opposite in orientation.

The inner diameter of the receptacle must be very slightly greater than the external diameter of the sample holder to allow the vertical displacement of the holder without friction but, at the same time, to avoid any deviation from the antiparallel colinear arrangement of the poles of the sample holder and external magnets.

In the device of the invention, the sample holder permanent magnet and the external permanent magnet or electromagnet are arranged relatively to each other, so that they generate magnetic fields aligned vertically and facing each other. This disposition of the magnets keeps the sample-holder suspended inside the liquid, so that the separation distance between the sample holder permanent magnet and the external permanent magnet or electromagnet depends on the mass present inside the sample holder which will depend on the adsorbate mass captured by the porous material.

The device incorporates an actuator, with a precision of at least a hundredth of a millimetre, coupled to the external permanent magnet or electromagnet, which is adapted to move very smoothly the external permanent magnet or electromagnet vertically, to place the sample holder at a fixed position and determine doing so the separation distance between the sample holder and the external magnet.

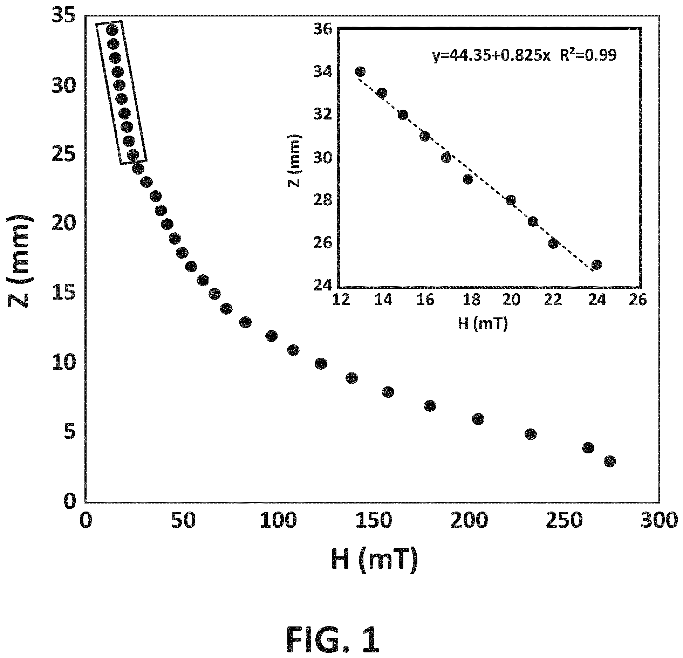

The configuration of the device that generates opposing magnetic fields results in a linear dependence, for small vertical variations of the distance, between the mass inside the sample holder and the distance between the sample holder and the external magnet. The above linear dependence comes from the variation of magnetic field generated by the external magnet which is represented by Figure 1. For the distance range at which the sample holder is found, this variation is linear as highlighted in the inset of Figure 1. Furthermore, this dependence is maintained when the sample together with the sample holder is inside a liquid medium, preferably water, so that it is possible to correlate, after calibration of the equipment, the mass captured by the adsorbent material with the decrease in distance with respect to the same amount of the adsorbent material without any adsorbate captured.

The present invention represents significant progress in the state of the art in the field of measuring adsorption in liquid media, by being able to, firstly, directly measure the amount (mass) of adsorbate captured by a diamagnetic adsorbent material and, secondly, ensure that its quantification capacity does not depend on the chemical nature of the adsorbed species (it is a universal technique). Measurements can be made in any liquid medium, regardless of its nature, pH, temperature and other parameters specific to each liquid. The direct measurement of the adsorbed amount implies a simpler and more immediate interpretation of the adsorption process, while the universality of the invention avoids the need to resort to different chemical analysis techniques, at the same time that it does not require a specific calibration for each adsorbate, since an initial calibration of the adsorbent material in the equipment is useful for any adsorbate that is going to be analysed.

Furthermore, a parameter that eliminates the dependence on the initial mass of adsorbent has been devised based on the values of the distance between the external magnet with respect: (i) the empty sample holder placed within the liquid medium, (ii) the sample holder with the adsorbent incorporated and (iii) the sample holder with the adsorbent after having captured the adsorbate. In other words, it is not necessary to use a fixed amount of adsorbent, but it is necessary to ensure that there is no loss of adsorbent material occurs during adsorption process and measurement. This parameter (D) is defined as the difference between the distances of the external magnet and the sample holder with the adsorbent having captured the adsorbate (called d_{T}) with respect to the distance for the empty sample holder (d_{E}), minus the difference between the distance of the sample holder with the adsorbent (d_{P}) and the empty sample holder (d_{E}), divided by the difference between the distance of the sample holder with the adsorbent (d_{P}) and the empty sample holder (d_{E}), as expressed in Equation 1: $D = \frac{\left({d}_{T}-{d}_{E}\right) - \left({d}_{P}-{d}_{E}\right)}{\left({d}_{P}-{d}_{E}\right)}$ Equation 1

In this way, the dependence on the employed mass amount of adsorbent and the weight of the sample holder is eliminated, making this parameter (D) only depend on the adsorbed adsorbate mass percentage.

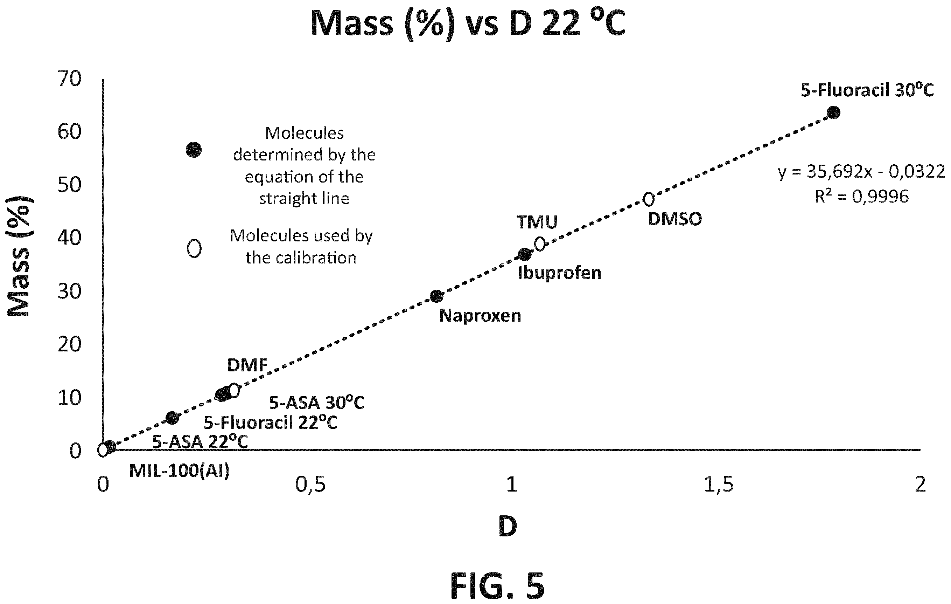

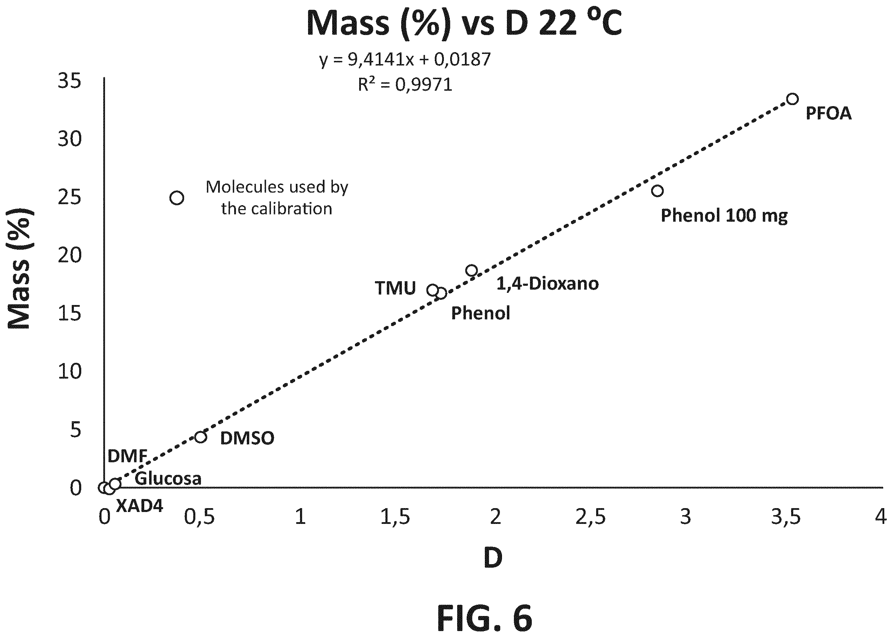

The calibration process for the adsorbent material is carried out by measuring the distance obtained in the device, necessary for the determination of the parameter D, for samples of the absorbent material with known mass percentages of captured adsorbates (calibration standards), which preferably correspond to different adsorbate molecules being captured, or less preferably the same adsorbate molecule captured at different mass percentages. The procedure to determine the captured mass percentage on these calibration standards can be performed using indirect techniques, chosen according to the intrinsic characteristics of the adsorbed molecule of interest (UV-Vis spectroscopy, NMR, etc.), which allows determining the amount captured by the adsorbent through the difference between the concentration of the adsorbate molecule in solution before and after the adsorption process. To obtain parameter D, it is necessary to measure the sample holder empty and with adsorbate. Once the empty sample holder has been measured, it will not be necessary to measure said value again in any subsequent calibration of any adsorbent material, as long as the vessel does not change. The representation of both values in a Mass(%) vs D diagram allows establishing the calibration line that subsequently allows quantifying the percentage of adsorbate mass captured by the adsorbent without the need to use any other analytical technique, as shown in **Figures 5** and **6****.**

The device of the invention is compact, low weight and easily portable, unlike many conventional chemical analysis equipment, the characteristics of which cause them to be fixed in specific areas.

The device of the invention is especially advantageous for scientific instrumentation companies, especially those oriented to the field of adsorption equipment (mainly in gases since this is where the technique is more developed). Given that this equipment can be used with any known porous material, these companies could sell it to companies/laboratories that wish to expand their range of characterisation techniques.

Likewise, industries dedicated to the synthesis of porous materials of known relevance in the field of pollutants capture in a liquid medium could benefit from a simple system that requires a small amount of sample to determine the capacity and selectivity of the new porous materials they develop.

Another aspect of the invention relates to a method for measuring the capacity of diamagnetic porous materials to capture substances dissolved in a liquid medium. It can be performed qualitatively without any calibration and quantitatively through the calibration of the adsorbent. The calibration line performed at specific conditions (solvent, temperature, etc.) only applies for measurements conducted under the same conditions.

Calibration is carried out by obtaining a straight calibration line with the percentage ratio of adsorbed mass to the parameter D.

### BRIEF DESCRIPTION OF THE FIGURES

To complete the description and in order to provide a better understanding of the invention, a set of drawings is provided, which form an integral part of the description and illustrate embodiments of the invention, which must not be construed as restricting the scope of the invention, but only as examples of the manner in which the invention can be carried out. The drawings comprise the following figures:
Figure 1 Evolution of the magnetic field created by the external permanent magnet with respect to the vertical distance.
Figure 2 shows a perspective view of a schematic representation of a device according to the invention, with a separate detail of the porous particle container.
Figure 3 shows a schematic representation of the measurement process that can be carried out with the device of the invention, where Figure 3A corresponds to an initial distance and Figure 3B corresponds to a final distance of the sample-holding container.
Figure 4 shows a perspective view of a prototype of the device according to the invention, with a separate detail of the porous particle container.
Figure 5 shows a graph of the linear relationship of the adsorbed mass versus the parameter D for the adsorbent molecule MIL-100(AI). The molecules which adsorbed mass has been corroborated by another analytical technique to determine the equation of the line are marked with a white circle, while molecules which mass has been determined by extrapolation on said equation are marked with a black circle.
Figure 6 shows a graph of the linear relationship of the adsorbed mass versus the lateral movement for the adsorbent molecule AmberLite XAD4. The molecules which adsorbed mass has been corroborated by another analytical technique to determine the equation of the line are marked with a white circle, while the molecules which mass has been determined by extrapolation on said equation are marked in red.

### PREFERRED EMBODIMENT OF THE INVENTION

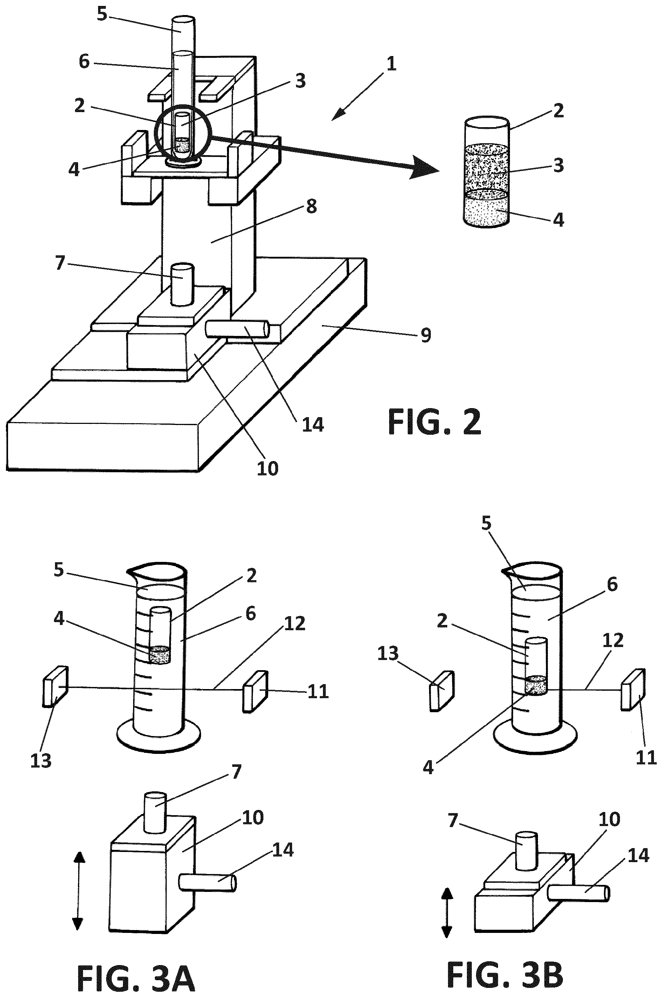

**Figure 2** shows an example of a measuring device (1) according to the invention, which is formed by a sample holder (2) containing a diamagnetic porous material (3) that has an adsorbate captured in its pores. The sample holder (2) has a sample holder permanent magnet (4) attached to the lower base of the container (2).

The device (1) also has a receptacle (5) inside which the sample holder (2) with the sample holder permanent magnet (4) is housed in a liquid medium (6). The receptacle (5), for example, a test tube, has an inner dimension slightly larger than the outer dimension of the container (2) and the sample holder permanent magnet (4), so that the container (2) is confined within the receptacle (5) so that it cannot reorient its magnetic poles, and the sample holder permanent magnet (4) supports the weight of the container and its contents.

The device (1) also has an external permanent magnet (7), arranged below the sample holder permanent magnet (4) and vertically aligned with the sample holder permanent magnet (4). The sample holder permanent magnet (4) and the external permanent magnet (7) are arranged relatively to each other, so that they generate magnetic fields aligned vertically and facing each other, to float the sample holder (2) in the liquid medium (6). In this way, the separation distance between the sample holder permanent magnet (4) and the external permanent magnet (7) depends on the mass supported by the sample holder permanent magnet.

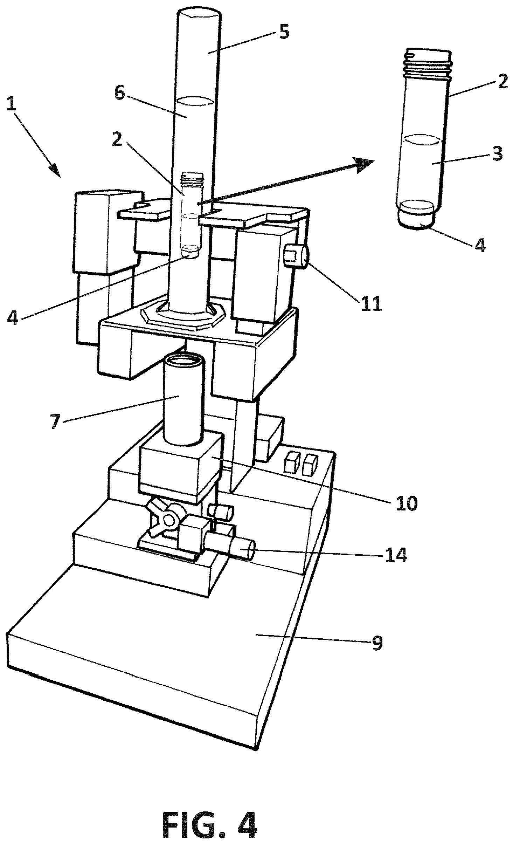

To maintain the magnets (4, 7) and the container and receptacle (2, 5) in the previously defined positions, the device (1) has a structure (8) supported on a base (9), as shown in **Figures 2** and **4****.**

Furthermore, the device (1) has an actuator (10) coupled to the external permanent magnet (7), which is adapted to move the external permanent magnet (7) vertically, to modify the separation distance with respect to the diamagnetic porous material (3) that is located inside the container (2).

As shown in **Figures 3** and **4****,** the device (1) is provided with means (11) to detect the position of the sample holder (2) within the receptacle (5) in which it is suspended. The means (11) may consist of a laser generator that emits a laser beam (12), which passes through the receptacle (5) and strikes a white surface (13). Furthermore, it also has means to measure the vertical movement of the external permanent magnet (7).

The measurement procedure is represented in **Figures 3A** and **3B****.** The measurement starts with the sample holder (2) containing the liquid, located at a distance **(****Figure 3A****)** with respect to the end point of the measurement that corresponds in this case to the laser beam (12), which is specific for the total mass supported at that moment.

A known amount of the adsorbent material of interest is added to the sample holder (2). The mass to be added should not be less than 50 mg to obtain a measurement with a reasonable error of the equipment. 3 ml of water are added to the container in which the measurement is to be taken and preferably the sample is centrifuged to deposit all the solid at the bottom of the vessel. Once this is done, it is added to the vessel (5) that contains 20 ml of water.

The procedure must be carried out slowly, adding the vessel to the tube to avoid the appearance of air bubbles therein. If bubbles appear, the container (2) that has the sample holder magnet (4) is moved so that they disappear. The container (2) is pushed very slowly into the liquid medium (6) contained in the vessel, doing so in such a way that both liquids connect and the container (2) remains suspended due to the magnetic repulsion forces of the external lower magnet (7) with the sample holder magnet (4), to the flotation exerted on the vessel and to the total weight thereof, which entails all that corresponds to the container (2) plus the adsorbent material, as shown in **Figure 3A****.**

Both liquids must be joined very slowly to avoid generating currents that could move the adsorbent. The container (2), which is floating, must be on the same axis as the external magnet (7) of the mobile shaft. The laser is turned on to observe how the light beam (12) strikes the white surface (13), passing through the vessel (5) where the container (2) is submerged. The mobile shaft (14) of the actuator (10) starts to move, to slowly lower the external magnet (7) attached to the actuator (10) and, therefore, in turn lowering the container (2) with the sample holder magnet (4). The mobile shaft (14) continues to be driven until the container (2) cuts off the laser beam (12), at which time the measurement stops, as shown in **Figure 3B****.**

As the adsorbent material captures a greater mass of the adsorbate, the distance travelled by the container (2) from the initial position to the final position determined by the laser beam (12) decreases. In other words, the distance between the start of the measurement and the end of the same decreases the greater the total mass inside the vessel.

The distance travelled with the actuator (10) depends on the mass of adsorbent present and the amount of adsorbate adsorbed by the same, and said value is used to obtain a parameter (D) that depends on the empty sample holder (2), on the sample holder (2) with the incorporated adsorbent, and with the adsorbent after having captured the adsorbate, and which presents a linearity with respect to the adsorbed mass, as shown in **Figures 5** and **6****.** This parameter (D) allows eliminating the dependence on the initial mass of adsorbent.

The device (1) is calibrated for each adsorbent material, requiring either several adsorbates which percentages of captured mass are known or the same adsorbate with different concentration. All measurements that are taken during the measurement process must be taken under the same conditions of temperature, solvent and volume of the liquid medium.

The device of the invention does not require an external power supply (in the event that only permanent magnets are used) and allows the in-situ and non-destructive measurement of the amount of mass captured by the porous material without needing to remove it from the aqueous medium. This allows simple measurement of adsorption isotherms and adsorption/desorption kinetics. The technique is not limited to room temperature, but can be applied to different temperatures and liquid media of interest (water, organic solvents, mixtures, solutions, physiological fluid). The device and the measurement process are universally applicable with respect to adsorbates since it is based on the mass thereof.

In the event of using an electromagnet instead of the external lower permanent magnet (7), it would be centred on the vertical of the sample holder permanent magnet (4) that is suspended, and the system can operate in two possible ways. The first way is where the field generated by the electromagnet is fixed to a constant one, acting in the same way as the system explained above, where it is placed on a mobile shaft that varies the distance from an initial point, characteristic of each adsorbent and adsorbate, to the designated end point. The second mode of operation does not require a mobile shaft, as it starts with a high magnetic field in the electromagnet, which is slowly reduced. In this system, the distance between the vessel with the permanent magnet and the electromagnet decreases in proportion to the decrease in the magnetic field of the electromagnet, until reaching the selected end point.

## Claims

1. A device (1) for measuring the capacity of diamagnetic porous materials to capture substances dissolved in a liquid medium, **characterised in that** the device comprises:
a sample holder (2) containing diamagnetic porous material (3), where the diamagnetic porous material (3) contains an adsorbate captured in its pores,
a sample holder permanent magnet (4) attached to the lower base of the sample-holding container,
a receptacle (5) inside which the container (2) and the sample holder permanent magnet (4) are housed in liquid (6) suspension, and such that the container is confined in a vertical position and the sample holder permanent magnet supports the weight of the container and its contents,
an external permanent magnet (7) or an electromagnet arranged below the sample holder permanent magnet (4) and vertically aligned with the sample holder permanent magnet (4),
where the sample holder permanent magnet (4**)** and the external magnet (7) or the electromagnet are arranged relatively to each other, so that they generate magnetic fields aligned vertically and facing each other, to float the sample-holding container,
so that the separation distance between the sample holder permanent magnet (4) and the external magnet (7) or the electromagnet depends on the mass supported by the sample holder permanent magnet (4).

2. The device for measuring the capacity of diamagnetic porous materials to capture substances dissolved in a liquid medium, according to claim 1, **characterised in that** it has an actuator (10) coupled to the external magnet or to the electromagnet, adapted to move the external permanent magnet or electromagnet vertically, to modify the separation distance with respect to the diamagnetic porous material.

3. The device for measuring the capacity of diamagnetic porous materials to capture substances dissolved in a liquid medium, according to claim 2, **characterised in that** it has means (11) to measure the movement of the external permanent magnet or electromagnet.

4. The device for measuring the capacity of diamagnetic porous materials to capture substances dissolved in a liquid medium, according to claim 1, **characterised in that** it has means to modify the intensity of the electromagnetic field generated by the electromagnet.

5. The device for measuring the capacity of diamagnetic porous materials to capture substances dissolved in a liquid medium, according to any of the preceding claims, **characterised in that** it also has means (11) to detect the position of the sample holder (2) in the receptacle (5) in which it is suspended.

6. The device for measuring the capacity of diamagnetic porous materials to capture substances dissolved in a liquid medium, according to any of the preceding claims, **characterised in that** the receptacle (5) has an inner dimension slightly larger than the outer dimension of the container and the sample holder permanent magnet (4), so that the container is confined as it is not able reorient its magnetic poles.

7. A method for measuring the capacity of diamagnetic porous materials (3) to capture substances dissolved in a liquid medium, using the device (1) defined in any of the preceding claims. previously calibrated for a specific adsorbate, **characterised in that** it comprises moving the external permanent magnet, (7) vertically, and measuring the distance travelled by the sample holder (2) from its initial position before starting to move the external magnet, and a predefined position in the vessel, located below the initial position, so that the distance travelled between both positions depends on the total mass of adsorbent and adsorbate supported by the sample-holding container.

8. The method for measuring the capacity of diamagnetic porous materials (3) to capture substances dissolved in a liquid medium (6), according to claim 7, **characterised in that** the mass of adsorbate captured by the diamagnetic porous material (3) is determined through a linear relationship between said mass and the distance travelled.

9. The method for measuring the capacity of diamagnetic porous materials (3) to capture substances dissolved in a liquid medium, according to claim 7 or 8, **characterised in that** calibration is carried out by obtaining a straight calibration line with the percentage ratio of adsorbed mass to a parameter D, where the parameter D is obtained by the device, which allows quantifying the percentage of adsorbate mass captured by the diamagnetic porous material (3).

## Patentansprüche

1. Vorrichtung (1) zur Messung der Fähigkeit diamagnetischer poröser Materialien, in einem flüssigen Medium gelöste Stoffe einzufangen, **dadurch gekennzeichnet, dass** die Vorrichtung umfasst:
ein Probenhalter (2), der ein diamagnetisches poröses Material (3) enthält, wobei das diamagnetische poröse Material (3) ein in seinen Poren gebundenes Adsorbat enthält, einen am unteren Boden des Probenhalterbehälters angebrachten Probenhalter-Permanentmagneten (4), ein Gefäß (5), in dessen Innerem der Behälter (2) und der Probenhalter-Permanentmagnet (4) in einer Flüssigkeitssuspension (6) untergebracht sind, wobei der Behälter in vertikaler Position gehalten wird und der Permanentmagnet des Probenhalters das Gewicht des Behälters und seines Inhalts trägt, einen externen Permanentmagneten (7) oder einen Elektromagneten, der unterhalb des Probenhalter-Permanentmagneten (4) angeordnet und vertikal auf diesen ausgerichtet ist, wobei der Probenhalter-Permanentmagnet (4) und der externe Magnet (7) oder der Elektromagnet relativ zueinander so angeordnet sind, sodass sie vertikal ausgerichtete und einander zugewandte Magnetfelder erzeugen, um den Probenhalterbehälter schweben zu lassen, wobei der Trennabstand zwischen dem Probenhalter-Permanentmagneten (4) und dem externen Magneten (7) oder dem Elektromagneten von der vom Probenhalter-Permanentmagneten (4) getragenen Masse abhängt.

2. Vorrichtung zur Messung der Fähigkeit diamagnetischer poröser Materialien, in einem flüssigen Medium gelöste Stoffe einzufangen, gemäß Anspruch 1, **dadurch gekennzeichnet, dass** es einen Aktuator (10) aufweist, der mit dem externen Magneten oder dem Elektromagneten gekoppelt ist und dazu ausgelegt ist, den externen Permanentmagneten oder Elektromagneten vertikal zu bewegen, um den Trennabstand zum diamagnetischen porösen Material zu verändern.

3. Vorrichtung zur Messung der Fähigkeit diamagnetischer poröser Materialien, in einem flüssigen Medium gelöste Stoffe einzufangen, gemäß Anspruch 2, **dadurch gekennzeichnet, dass** sie Mittel (11) zur Messung der Bewegung des externen Permanentmagneten oder Elektromagneten aufweist.

4. Vorrichtung zur Messung der Fähigkeit diamagnetischer poröser Materialien, in einem flüssigen Medium gelöste Stoffe einzufangen, gemäß Anspruch 1, **dadurch gekennzeichnet, dass** sie Mittel zur Veränderung der Intensität des vom Elektromagneten erzeugten elektromagnetischen Feldes aufweist.

5. Vorrichtung zur Messung der Fähigkeit diamagnetischer poröser Materialien, in einem flüssigen Medium gelöste Stoffe einzufangen, gemäß einem der vorhergehenden Ansprüche, **dadurch gekennzeichnet, dass** sie ferner Mittel (11) zum Erfassen der Position des Probenhalters (2) in dem Gefäß (5) aufweist, in dem dieser aufgehängt ist.

6. Vorrichtung zur Messung der Fähigkeit diamagnetischer poröser Materialien, in einem flüssigen Medium gelöste Stoffe einzufangen, gemäß einem der vorhergehenden Ansprüche, **dadurch gekennzeichnet, dass** das Gefäß (5) ein Innenmaß aufweist, das geringfügig größer ist als das Außenmaß des Behälters und des Probenhalters mit Permanentmagnet (4), sodass der Behälter fixiert ist, da er seine Magnetpole nicht neu ausrichten kann.

7. Verfahren zur Messung der Fähigkeit diamagnetischer poröser Materialien (3), in einem flüssigen Medium gelöste Stoffe einzufangen, unter Verwendung der in einem der vorhergehenden Ansprüche definierten Vorrichtung (1), die zuvor für ein bestimmtes Adsorbat kalibriert wurde, **dadurch gekennzeichnet, dass** es das vertikale Bewegen des externen Permanentmagneten (7) umfasst, und das Messen der Strecke, die der Probenhalter (2) von seiner Ausgangsposition vor Beginn der Bewegung des externen Magneten bis zu einer vordefinierten Position im Gefäß, die unterhalb der Ausgangsposition liegt, zurücklegt, wobei die zwischen beiden Positionen zurückgelegte Strecke von der Gesamtmasse des Adsorptionsmittels und des Adsorbats abhängt, die vom Probenhalterbehälter getragen werden.

8. Verfahren zur Messung der Fähigkeit diamagnetischer poröser Materialien (3), in einem flüssigen Medium (6) gelöste Stoffe einzufangen, gemäß Anspruch 7, **dadurch gekennzeichnet, dass** die Masse des vom diamagnetischen porösen Material (3) gebundenen Adsorbats anhand einer linearen Beziehung zwischen dieser Masse und der zurückgelegten Strecke bestimmt wird.

9. Verfahren zur Messung der Fähigkeit diamagnetischer poröser Materialien (3), in einem flüssigen Medium gelöste Stoffe einzufangen, gemäß Anspruch 7 oder 8, **dadurch gekennzeichnet, dass** die Kalibrierung dadurch erfolgt, dass eine lineare Kalibrierungsgerade mit dem prozentualen Verhältnis der adsorbierten Masse zu einem Parameter D ermittelt wird, wobei der Parameter D von der Vorrichtung ermittelt wird, wodurch der prozentuale Anteil der vom diamagnetischen porösen Material (3) gebundenen Adsorbatmasse quantifiziert werden kann.

## Revendications

1. Dispositif (1) pour mesurer la capacité de matériaux poreux diamagnétiques à capturer des substances dissoutes dans un milieu liquide, **caractérisé en ce que** le dispositif comprend :
un porte-échantillon (2) contenant un matériau poreux diamagnétique (3), où le matériau poreux diamagnétique (3) contient un adsorbat capturé dans ses pores,
un aimant permanent de porte-échantillon (4) fixé à la base inférieure du récipient de porte-échantillon,
un réceptacle (5) à l'intérieur duquel le récipient (2) et l'aimant permanent de porte-échantillon (4) sont logés en suspension liquide (6), et de sorte que le récipient soit confiné en position verticale et l'aimant permanent de porte-échantillon supporte le poids du récipient et de son contenu,
un aimant permanent externe (7) ou un électroaimant agencé en dessous de l'aimant permanent de porte-échantillon (4) et aligné verticalement avec l'aimant permanent de porte-échantillon (4),
où l'aimant permanent de porte-échantillon (4) et l'aimant externe (7) ou l'électroaimant sont agencés l'un par rapport à l'autre, de sorte qu'ils génèrent des champs magnétiques alignés verticalement et se faisant face, afin de faire flotter le récipient de porte-échantillon, de sorte que la distance de séparation entre l'aimant permanent de porte-échantillon (4) et l'aimant externe (7) ou l'électroaimant dépende de la masse supportée par l'aimant permanent de porte-échantillon (4).

2. Dispositif pour mesurer la capacité de matériaux poreux diamagnétiques à capturer des substances dissoutes dans un milieu liquide, selon la revendication 1, **caractérisé en ce qu'**il a un actionneur (10) couplé à l'aimant externe ou à l'électroaimant, adapté pour déplacer verticalement l'aimant permanent externe ou l'électroaimant, afin de modifier la distance de séparation par rapport au matériau poreux diamagnétique.

3. Dispositif pour mesurer la capacité de matériaux poreux diamagnétiques à capturer des substances dissoutes dans un milieu liquide, selon la revendication 2, **caractérisé en ce qu'**il a un moyen (11) pour mesurer le mouvement de l'aimant permanent externe ou de l'électroaimant.

4. Dispositif pour mesurer la capacité de matériaux poreux diamagnétiques à capturer des substances dissoutes dans un milieu liquide, selon la revendication 1, **caractérisé en ce qu'**il a un moyen pour modifier l'intensité du champ électromagnétique généré par l'électroaimant.

5. Dispositif pour mesurer la capacité de matériaux poreux diamagnétiques à capturer des substances dissoutes dans un milieu liquide, selon l'une des revendications précédentes, **caractérisé en ce qu'**il a également un moyen (11) pour détecter la position du porte-échantillon (2) dans le réceptacle (5) dans lequel il est suspendu.

6. Dispositif pour mesurer la capacité de matériaux poreux diamagnétiques à capturer des substances dissoutes dans un milieu liquide, selon l'une des revendications précédentes, **caractérisé en ce que** le réceptacle (5) a une dimension interne légèrement supérieure à la dimension externe du récipient et de l'aimant permanent de porte-échantillon (4), de sorte que le récipient soit confiné à mesure qu'il n'est pas capable de réorienter ses pôles magnétiques.

7. Procédé pour mesurer la capacité de matériaux poreux diamagnétiques (3) à capturer des substances dissoutes dans un milieu liquide, utilisant le dispositif (1) défini dans l'une des revendications précédentes, préalablement étalonné pour un adsorbat spécifique, **caractérisé en ce qu'**il comprend le déplacement de l'aimant permanent externe (7) verticalement, et la mesure de la distance parcourue par le porte-échantillon (2) de sa position initiale avant le début du déplacement de l'aimant externe à une position prédéfinie dans le réceptacle, située en dessous de la position initiale, de sorte que la distance parcourue entre les deux positions dépende de la masse totale de l'adsorbant et de l'adsorbat supportés par le récipient de porte-échantillon.

8. Procédé pour mesurer la capacité de matériaux poreux diamagnétiques (3) à capturer des substances dissoutes dans un milieu liquide (6), selon la revendication 7, **caractérisé en ce que** la masse de l'adsorbat capturé par le matériau poreux diamagnétique (3) est déterminée par une relation linéaire entre ladite masse et la distance parcourue.

9. Procédé pour mesurer la capacité de matériaux poreux diamagnétiques (3) à capturer des substances dissoutes dans un milieu liquide, selon la revendication 7 ou 8, **caractérisé en ce que** l'étalonnage est réalisé en obtenant une droite d'étalonnage avec le rapport en pourcentage de la masse adsorbée sur un paramètre D, où le paramètre D est obtenu par le dispositif, ce qui permet de quantifier le pourcentage de la masse d'adsorbat capturée par le matériau poreux diamagnétique (3).
